(19) Europäisches Patentamt

European Patent Office

Office européen des brevets

(11) **EP 1 387 502 B1**

(12) **FASCICULE DE BREVET EUROPEEN**

(45) Date de publication et mention
de la délivrance du brevet:
**23.11.2005 Bulletin 2005/47**

(51) Int Cl.⁷: **H04B 7/08**, G07C 9/00

(21) Numéro de dépôt: **02078252.0**

(22) Date de dépôt: **31.07.2002**

(54) **Récepteur portable à dispersion réduite**

Tragbarer Empfänger mit verringerter Dispersion

Portable receiver with reduced dispersion

(84) Etats contractants désignés:
**CH DE FR GB IT LI**

(43) Date de publication de la demande:
**04.02.2004 Bulletin 2004/06**

(73) Titulaire: **EM Microelectronic-Marin SA**
**2074 Marin (CH)**

(72) Inventeur: **Lamothe, Christian**
**2000 Neuchâtel (CH)**

(74) Mandataire: **Surmely, Gérard et al**
**I C B**
**Ingénieurs Conseils en Brevets SA,**
**Rue des Sors 7**
**2074 Marin (CH)**

(56) Documents cités:
WO-A-00/11753          FR-A- 2 763 186
FR-A- 2 792 129          US-A- 5 912 925

# Description

La présente invention concerne un récepteur portable destiné notamment à des applications dans l'industrie automobile, par exemple pour l'ouverture à distance d'un véhicule, et plus généralement à des applications pour des systèmes de détection sans contact.

Le récepteur portable comprend un premier étage de réception comportant trois antennes orientées de manière à former un repère sensiblement orthogonal, et susceptibles de recevoir un signal externe dans une plage de fréquence donnée, un deuxième étage de traitement des signaux délivrés en sortie des antennes, et un troisième étage de sélection d'un des signaux délivrés en sortie de l'étage de traitement ou un troisième étage de combinaison des signaux délivrés en sortie de l'étage de traitement.

Il est connu dans l'art antérieur, notamment du document FR 2 763 186, comme cela est représenté à la figure 1, un récepteur portable à trois antennes 1, 2 et 3 disposées perpendiculairement deux à deux et recevant chacune une composante V1, V2 et V3, suivant leur axe d'un signal externe. Des moyens amplificateurs 4, 5 et 6 placés en sortie de chaque antenne permet de délivrer trois signaux amplifiés V4, V5 et V6. Ces trois signaux V4, V5 et V6 sont fournis, selon un premier mode de réalisation, en entrée d'un additionneur 7 et selon un deuxième de réalisation, en entrée de moyens de sélection 7 du signal ayant la plus grande amplitude.

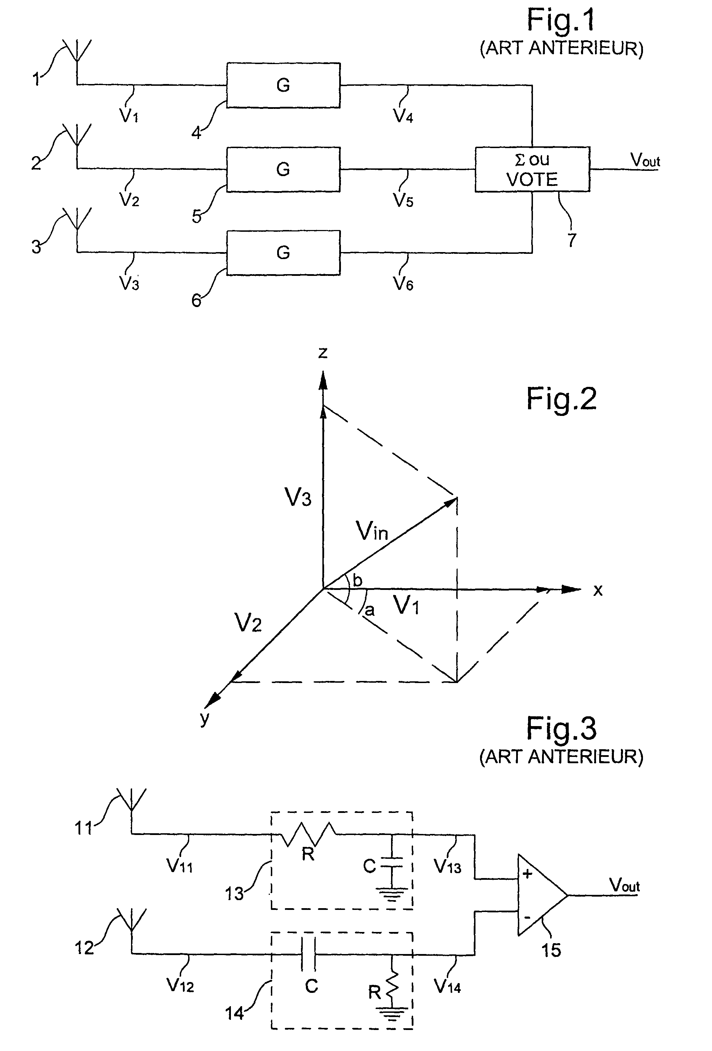

La figure 2 représente un repère orthogonal, défini par les axes des trois antennes, dans lequel il est possible de décomposer le signal externe V0.cos(wt) reçu en trois composantes V1, V2 et V3 définies par les formules suivantes :

$$V1 = V0.\cos(wt).\sin(a).\cos(b) \ ;$$

$$V2 = V0.\cos(wt).\cos(a).\cos(b) \ ;$$

$$V3 = V0.\cos(wt).\sin(b) \ ;$$

où V0 représente l'amplitude et cos(wt) la phase du signal externe reçu par le récepteur portable. Les signaux V4, V5 et V6 ne diffèrent des signaux V1, V2 et V3, qu'en ce qu'il introduise un facteur de gain G du aux amplificateurs placés en sortie des antennes.

Un tel récepteur présente néanmoins quelques inconvénients. Selon le premier mode de réalisation utilisant un additionneur, il existe plusieurs "trous" de réception. On appelle trous de réception, une orientation du récepteur portable, par exemple une clé de véhicule automobile, par rapport à l'émetteur, par exemple le véhicule automobile, selon laquelle le récepteur portable ne reçoit aucun signal et ce quasiment quelle que soit la distance entre l'émetteur et le récepteur.

En effet, selon ce premier mode, la somme des signaux (V4 + V5 + V6) obtenue en sortie de l'additionneur s'annule lorsque :

$$\cos(b).(\sin(a)+\cos(a)) + \sin(b) = 0 \ ;$$

Cette équation est notamment pour vérifier pour les couples a et b suivants :

$$a = 0 \text{ et } b = -pi/4 \ ;$$

$$a = pi/2 \text{ et } b = -pi/4 \ ;$$

$$a = -pi/4 \text{ et } b = 0 \ ;$$

Ainsi, il existe au moins trois trous de réception pour les couples sus cités.

L'un des éléments primordiaux dans de tels systèmes de détection sans contact, réside dans la nécessité de bénéficier d'un récepteur à dispersion réduite. On entend par dispersion ou zone de dispersion, la zone spatiale dans laquelle la réception ou non des signaux de l'émetteur dépend de l'orientation du récepteur par rapport à l'émetteur. Le facteur de dispersion est défini par les extremums de l'amplitude du signal délivré en sortie de l'additionneur ou des moyens de sélection du récepteur.

Selon le premier mode de réalisation présenté dans le document FR 2 763 186, dans la zone de dispersion, l'amplitude maximale équivaut à l'amplitude du signal externe, à un facteur de gain près introduit par les amplificateurs.

En effet, le signal de sortie présente une amplitude maximale lorsqu'une des antennes 1, 2 ou 3 est orientée suivant l'axe de l'émetteur, par exemple :

$$V4 = G.V1 = G.V0.\cos(wt) \ ;$$

$$V5 = V6 = 0 \ ;$$

Selon ce premier mode, le signal de sortie présente une amplitude minimale pour chaque trou de réception. Dans ces cas, l'amplitude est nulle. Ainsi, le facteur de dispersion varie entre 0 et 1. Dans toute la zone d'émission de l'émetteur dans laquelle le récepteur est sensé fonctionner, la réception effective dépendra donc de l'orientation du récepteur par rapport à l'émetteur.

Selon le deuxième mode, le récepteur utilise des moyens de sélection du signal ayant la plus grande amplitude. Le signal sélectionné présente une amplitude maximale lorsqu'une des antennes 1, 2 ou 3 est orientée suivant l'axe de l'émetteur, ce qui donne par

exemple :

$$V4 = G.V0.\cos(wt) \; ;$$

$$V5 = V6 = 0 \; ;$$

Le signal sélectionné V4, V5 ou V6 présente une amplitude minimale lorsque l'amplitude des signaux reçus par chacune des trois antennes est égale. On a donc l'équation suivante :

$$V4 = V5 = V6 \; ;$$

Ce qui implique :

$$\cos a = \sin a \; ;$$

$$\cos^2 b = \sin^2 b \; ;$$

On obtient donc un signal à amplitude minimale, par exemple :

$$V4 = 1/\sqrt{3}.V0.\cos(wt) \; ;$$

La solution selon ce deuxième mode de réalisation présente donc un facteur de dispersion variant entre $1/\sqrt{3}$ et 1. La dispersion est donc de l'ordre de 42%, ce qui peut représenter, dans une certaine mesure un inconvénient pour des raisons de sécurité ou de commodité d'usage. De plus, les moyens de sélection reçoivent trois signaux parmi lesquels est sélectionné celui ayant la plus grande amplitude, ce qui nécessite un traitement relativement complexe. Les moyens de sélection doivent premièrement connaître l'amplitude des trois signaux V4, V5 et V6, et deuxièmement comparer les trois signaux deux à deux, la sélection ne pouvant avoir lieu qu'une fois toutes ces opérations effectuées.
De plus encore, les solutions suivant ces deux modes de réalisation nécessitent l'utilisation de trois amplificateurs, ce qui implique une forte consommation d'énergie dans le récepteur. Or l'un des soucis constants de l'homme du métier est de réduire au maximum la consommation afin d'augmenter l'autonomie d'un tel récepteur portable.
Par ailleurs, il est également connu dans l'art antérieur, notamment du document FR 2 792 129, comme cela est représenté à la figure 3, un récepteur portable à deux antennes 11 et 12 orientées perpendiculairement l'une par rapport à l'autre. Un circuit déphaseur 13, 14 est disposé à la sortie de chacune des antennes, les signaux V11, V12 délivrés par les antennes étant alors théoriquement déphasés de +45° et -45°, ce qui permet théoriquement encore d'obtenir des signaux V13, V14 en sortie des circuits déphaseurs 13 et 14 déphasés de 90° l'un par rapport à l'autre. Ces signaux V13 et V14 sont ensuite fournis à un soustracteur 15 qui permet de reconstituer le signal externe reçu par les antennes.
Cette solution présente néanmoins quelques inconvénients. Le récepteur ne comporte que deux antennes, et ne reçoit donc que les signaux externes dans le plan formé par ces deux antennes. Ce récepteur ne permet donc que de recevoir suivant deux directions, la troisième direction correspondant à un trou de réception. De plus, la solution présentée dans ce document ne tient ni compte du soustracteur 15 placé en sortie des circuits déphaseurs 13 et 14, ni des caractéristiques propres des antennes 11 et 12, ce qui entraîne le non-respect des déphasages souhaités et par là même n'assure plus la stabilité en amplitude recherchée. Ce document montre en outre un récepteur portable à 3 antennes présentant également des trous dans le diagramme de réception.
La présente invention se propose donc de pallier les inconvénients susmentionnés en fournissant un récepteur portable ayant une dispersion réduite tout en consommant un minimum d'énergie.
A cet effet, le récepteur portable selon l'invention, dans le cas d'un troisième étage de sélection, en plus de ce qu'il satisfait à la définition donnée en introduction de la description, est caractérisé en ce que ledit deuxième étage de traitement comprend des premier et second déphaseurs connectés en sortie de deux desdites antennes, lesdits signaux délivrés en sortie de ces deux antennes étant déphasés d'un angle de $\pi/2$ ou $3\pi/2$ l'un par rapport à l'autre, et des moyens pour combiner lesdits signaux déphasés formant un premier signal délivré audit troisième étage de sélection, ledit signal délivré par la troisième antenne constituant un second signal délivré audit troisième étage de sélection, et en ce que ledit troisième étage de sélection comprend des moyens pour sélectionner parmi lesdits deux signaux délivrés en sortie dudit deuxième étage, soit le signal ayant la plus grande amplitude, soit un des deux signaux ayant une amplitude supérieure à une amplitude de référence, soit arbitrairement un des deux signaux s'ils ont la même amplitude.
Ou selon une alternative, dans le cas d'un troisième étage de combinaison, le récepteur portable selon l'invention, en plus de ce qu'il satisfait à la définition donnée en introduction de la description, est caractérisé en ce que ledit deuxième étage de traitement comprend des premiers et seconds déphaseurs connectés en sortie de deux desdites antennes, lesdits signaux délivrés en sortie de ces deux antennes étant déphasés d'un angle de $\pi/2$ ou $3\pi/2$ l'un par rapport à l'autre, et des moyens pour combiner lesdits signaux déphasés formant un premier signal combiné fourni en entrée de premiers moyens élévateurs au carré, en ce que ledit deuxième étage de traitement comprend en outre des moyens correcteurs pour corriger l'atténuation introduite par les premier et second déphaseurs en série avec des seconds moyens élévateurs au carré, et en ce que ledit troisième étage de combinaison comprend un additionneur recevant en entrée les signaux à la sortie desdits premiers et seconds moyens élévateurs au carré.

D'autres avantages apparaîtront à la lumière de la description fournie uniquement à titre d'exemple, et illustrée par les dessins annexés dans lesquels :

La figure 1, déjà décrite, représente un récepteur portable selon un premier art antérieur ;
La figure 2, déjà décrite, représente un repère orthogonal défini par les axes des trois antennes, dans lequel il est possible de décomposer le signal externe reçu en trois composantes ;
La figure 3, déjà décrite représente un récepteur portable selon un deuxième art antérieur ;
La figure 4 représente un récepteur portable selon un premier mode de réalisation selon l'invention ;
La figure 5 représente un récepteur portable selon un deuxième mode de réalisation selon l'invention ;
La figure 6 représente un récepteur portable selon un troisième mode de réalisation de l'invention.

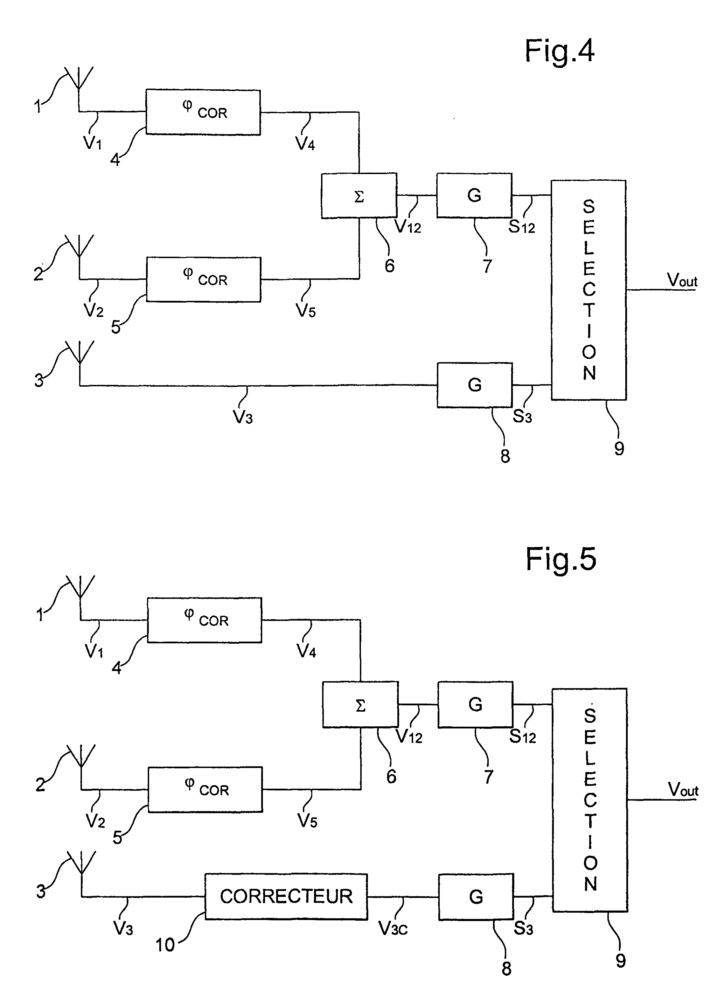

Selon un premier mode de réalisation selon l'invention, comme représenté à la figure 4, le récepteur comprend trois antennes 1, 2 et 3 formant un repère orthogonal. À la sortie des antennes 1 et 2, sont disposés des déphaseurs 4 et 5, par exemple des déphaseurs RC et CR, permettant de déphaser les signaux V1 et V2 délivrés par ces antennes. Les deux signaux V4 et V5 déphasés sont fournis en entrée d'un additionneur 6, ou d'un soustracteur, suivant le sens d'orientation des antennes. Le signal V12 délivré en sortie de l'additionneur 6, ou du soustracteur, doit avoir une amplitude sensiblement constante, ce qui permet de ne pas avoir de dispersion dans le plan formé par ces deux antennes 1 et 2. Il a été mis en évidence, dans le cadre de la demande de brevet européenne EP-A-1 286 477 appartenant à l'état de la technique au titre de l'Art 54(3) CBE, que l'additionneur ou le soustracteur utilisé introduisent des composants parasites d'ordinaire négligeables, non représentés, comprenant notamment une capacité parasite de l'ordre de grandeur des capacités utilisées dans les déphaseurs RC et CR. Ces éléments parasites ont pour effet de faire varier le déphasage entre les deux signaux V4 et V5, et par conséquent l'amplitude du signal V12, ainsi que le facteur de dispersion. C'est pourquoi, il est prévu des moyens de correction incorporés dans les blocs ($\varphi_{COR}$) représentant les circuits déphaseurs 4 et 5. Ces moyens de correction sont formés par exemple d'une résistance de correction comme dans le mode de réalisation de la figure 4 de la demande de brevet européenne EP-A-1 286 477, cette résistance de correction étant définie par la valeur suivante :

$$Rcor = (Rant * Req) / (Req - Rant),$$

où Rant est la résistance interne de l'antenne correspondante, où Req est la résistance équivalente du circuit déphaseur correspondant, Req étant supérieur ou égal à Rant.

Des condensateurs de correction peuvent également être prévus, les capacités des deux condensateurs de correction étant données par la formule suivante

$$Ccor = Cant - Ceq,$$

où Cant est la capacité interne de l'antenne correspondante et où Ceq est la capacité équivalente du circuit déphaseur correspondant et de l'entrée correspondante des moyens de multiplexage, Cant étant supérieur ou égal à Ceq.

Ces moyens de correction permettent d'obtenir un déphasage constant de 90° entre les deux signaux V4 et V5 déphasés, est une amplitude constante du signal V12 en sortie de l'additionneur ou du soustracteur, ainsi qu'un facteur de dispersion ne variant pas dans le plan formé par ces deux antennes, c'est-à-dire égal à 1. Le signal V12 obtenu en sortie est ensuite amplifié dans un amplificateur 7 qui fournit un signal S12 à des moyens de sélection 9.

La troisième antenne 3 délivre un signal V3 qui est également amplifié dans un autre amplificateur 8 qui fournit un deuxième signal S3 aux moyens de sélection 9. Les moyens de sélection 9 permettent de sélectionner soit le signal ayant la plus grande amplitude par simple comparaison des deux signaux S12 et S3 fournis à ses entrées, soit de comparer le signal S12 à un signal de référence Sref et de sélectionner ce signal S12 si son amplitude est supérieure à celle du signal de référence Sref, et dans le cas contraire de comparer le signal S3 au signal de référence Sref, et de sélectionner ce signal S3 si son amplitude est supérieure à celle du signal de référence Sref. Si aucun des deux signaux S12 et S3 n'a une amplitude suffisante, le récepteur ne peut recevoir car il est trop loin de l'émetteur, sa sensibilité étant alors insuffisante. Ainsi la réception ne dépend plus de l'orientation du récepteur par rapport à l'émetteur. Il est à noter qu'il est possible de combiner les deux alternatives de sélection d'un signal. Enfin, si les deux signaux S12 et S3 présentent une même amplitude, un des deux signaux est choisi arbitrairement.

L'étude de la dispersion, selon ce premier mode de réalisation de l'invention, montre que l'on a :

$$S12 = G. \sqrt{2}/2.V0.\cos b;$$

$$S3 = G.V0.\sin b ;$$

On obtient un signal Vout en sortie à amplitude minimale, pour sinb = 1 :

$$Vout = G.V0 ;$$

On obtient un signal Vout en sortie à amplitude minimale lorsque :

$$S12=S3;$$

Soit :

$$\sqrt{2}/2.cosb = sinb;$$

Ce qui donne :

$$cosb = \sqrt{(2/3)} ;$$

$$sinb = 1/\sqrt{3};$$

D'où :

$$Vout = G.V0/\sqrt{3}$$

La dispersion en amplitude varie d'un facteur de 0,58 à 1. Cependant, cette solution présente l'avantage par rapport à la solution de l'art antérieur représentée à la figure 1, de n'utiliser que deux amplificateurs 7 et 8, ce qui représente une réduction de la consommation du circuit.

Selon un deuxième mode de réalisation de l'invention, représenté la figure 5, partant du même circuit de réception que celui décrit la figure 4, il est prévu de placer des moyens correcteurs 10 à la sortie de la troisième antenne 3.

En effet, dans le cadre de la présente invention, il été mis en évidence que les circuits déphaseurs 4 et 5 utilisés en sortie des première 1 et deuxième 2 antennes introduisent une atténuation de l'ordre de $\sqrt{2}/2$.

Les moyens correcteurs 10 utilisés pour corriger cette atténuation observée sont préférentiellement placés avant l'amplificateur 8, ce qui permet de donner une meilleure symétrie au circuit récepteur. Toutefois, il est possible de placer ces moyens correcteurs après l'amplificateur.

Les signaux reçus par les antennes 1, 2 et 3 sont de la forme :

$$V1 = V0.cos(wt).sina.cosb ;$$

$$V2 = V0.cos(wt).cosa.cosb ;$$

$$V3 = V0.cos(wt).sinb ;$$

Le traitement des deux premières voies reste identique à ce qui avait été vu pour le premier mode de réalisation représenté la figure 4. Le module du signal délivré en sortie de l'additionneur 6, ou du soustracteur, utilisé est sous la forme suivante :

$$V12 = \sqrt{2}/2.V0.cosb ;$$

Pour la troisième antenne 3, les moyens correcteurs 10 permettent de corriger les effets des composants parasites, mais également de corriger l'atténuation introduite par les déphaseurs 4 et 5 des deux premières voies. Ces moyens correcteurs 10 sont par exemple formés par un simple atténuateur résistif R1 et R2 où les valeurs des résistances sont choisies adéquatement de manière à obtenir l'atténuation souhaitée ($\sqrt{2}/2$). On pourra prendre par exemple :

$$R1 = (2 - \sqrt{2}).R \text{ et}$$

$$R2 = \sqrt{2}.R$$

Le module du signal délivré en sortie de ces moyens correcteurs 10 est donné par la forme suivante :

$$V3c = \sqrt{2}/2.V0.sinb ;$$

On obtient donc après amplification dans les deux amplificateurs 7 et 8 les deux signaux S12 et S3 suivants en entrée des moyens de sélection 9:

$$S12 = G.V12 ;$$

$$S3 = G.V3c ;$$

On obtient un signal Vout de sortie avec une amplitude maximale par exemple pour cosb = 1 :

$$Vout = \sqrt{2}/2.V0 ;$$

On obtient un signal Vout de sortie avec une amplitude minimale lorsque :

$$S12 = S3 ;$$

Soit :

$$cosb = sinb ;$$

D'où:

$$Vout = \tfrac{1}{2}.V0$$

La dispersion en amplitude varie d'un facteur de 0,71 à 1.

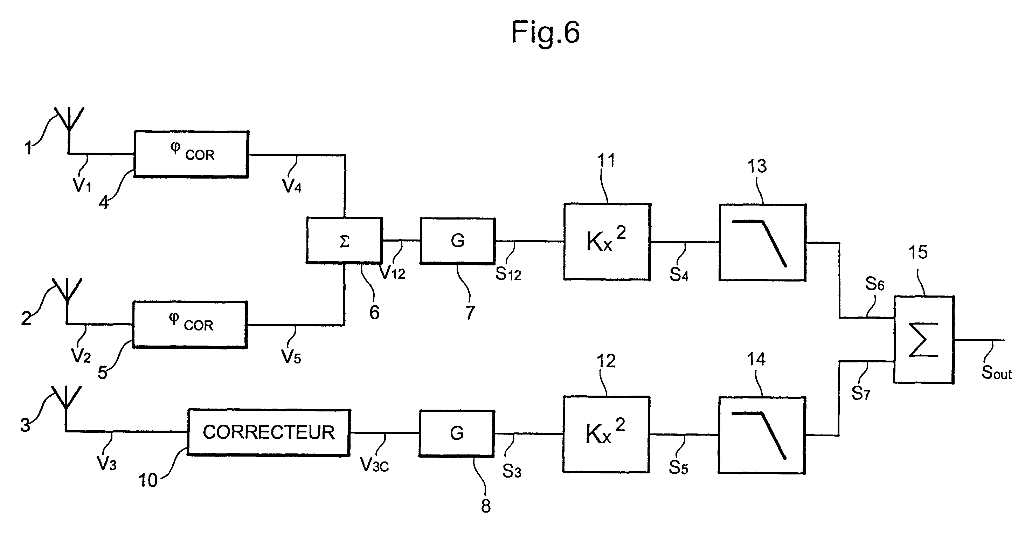

Selon un troisième mode de réalisation de l'invention, représenté la figure 6, partant du même circuit de réception que celui décrit la figure 5, il est prévu de remplacer le troisième étage de sélection comprenant les moyens de sélection prévu en sortie, par un troisième étage de combinaison et d'ajouter au deuxième étage de traitement des moyens élévateurs au carré, 11 et 12 placés à la sortie des amplificateurs, respectivement 7 et 8, préférentiellement en série avec des moyens de filtrage passe-bas, respectivement 13 et 14, permettant de filtrer les hautes fréquences et de récupérer la composante continue du signal. Le troisième étage de combinaison comprend un additionneur 15 placé à la sortie des moyens de filtrage pour combiner les signaux reçus.

Comme dans le cas du deuxième mode de réalisation on obtient après amplification dans les deux amplificateurs 7 et 8, les deux signaux S12 et S3 suivants en entrée des moyens élévateur au carré 11 et 12 :

$$S12(t) = G.\sqrt{2}/2.V0.cosb.cos(wt);$$

$$S3(t) = G.\sqrt{2}/2.V0.sinb.cos(wt) ;$$

Après élévation au carré dans les deux élévateurs au carré 11 et 12, choisis par exemple avec un coefficient égal k, on obtient les deux signaux S4 et S5 suivants :

$$S4(t) = k.S12^2(t) = k.(G.\sqrt{2}/2.V0.cosb)^2.cos^2(wt) ;$$

$$S5(t) = k.S3^2(t) = k.(G.\sqrt{2}/2.V0.sinb)^2.cos^2(wt) ;$$

Après filtrage dans les moyens de filtrage passe-bas 13 et 14, on récupère une composante quasi continue des signaux S6 et S7 :

$$S6 = k/2.(G.\sqrt{2}/2.V0)^2.cos^2 b ;$$

$$S7 = k/2.(G.\sqrt{2}/2.V0)^2.sin^2 b ;$$

Après sommation des signaux S6 et S7 dans l'additionneur 15, on obtient le signal de sortie Sout suivant :

$$Sout = k/4.V0^2 ;$$

La dispersion due à la position du récepteur par rapport à l'émetteur est donc annulée.

Il est bien entendu que la description n'est donnée qu'à titre d'exemple et que d'autres modes de réalisation, en particulier des moyens de correction, peuvent faire l'objet de la présente invention.

## Revendications

1. Récepteur portable comprenant un premier étage de réception comportant trois antennes (1, 2 et 3) orientées de manière à former un repère sensiblement orthogonal, susceptible de recevoir un signal externe dans une plage de fréquence donnée, un deuxième étage de traitement des signaux délivrés (V1, V2 et V3) eri sorties desdites antennes, **caractérisé en ce qu'**il comprend un troisième étage de sélection d'un des signaux délivrés en sortie dudit deuxième étage de traitement, ledit deuxième étage de traitement comprenant des premier (4) et second (5) déphaseurs connectés en sortie de deux desdites antennes (1 et 2), lesdits signaux délivrés (V1 et V2) en sortie de ces deux antennes étant déphasés d'un angle de $\pi/2$ ou $3\pi/2$ l'un par rapport à l'autre, et des moyens (6) pour combiner lesdits signaux déphasés (V4 et V5) formant un premier signal (S12) délivré audit troisième étage de sélection, ledit signal délivré (V3) par la troisième antenne constituant un second signal délivré (S3) audit troisième étage de sélection, et **en ce que** ledit troisième étage de sélection comprend des moyens (9) pour sélectionner parmi lesdits deux signaux délivrés (S12 et S3) en sortie dudit deuxième étage, soit le signal ayant la plus grande amplitude, soit un des deux signaux ayant une amplitude supérieure à une amplitude de référence, soit arbitrairement un des deux signaux s'ils ont la même amplitude.

2. Récepteur portable selon la revendication 1, **caractérisé en ce que** des moyens correcteurs (10) pour corriger l'atténuation introduite par les premier et second déphaseurs, sont placés entre ladite troisième antenne (3) et l'entrée correspondante (S3) desdits moyens de sélection (9).

3. Récepteur portable selon la revendication 2, **caractérisé en ce qu'**un premier amplificateur (7) est placé entre les moyens (6) pour combiner les signaux déphasés (V4 et V5) et lesdits moyens de sélection (9) et **en ce qu'**un deuxième amplificateur (8) est placé entre les moyens correcteurs (10) et lesdits moyens de sélection (9).

**4.** Récepteur portable comprenant un premier étage de réception comportant trois antennes (1, 2 et 3) orientées de manière à former un repère sensiblement orthogonal, susceptible de recevoir un signal externe dans une plage de fréquence donnée, un deuxième étage de traitement des signaux délivrés en sorties desdites antennes, et un troisième étage de combinaison des signaux délivrés en sortie dudit deuxième étage de traitement, **caractérisé en ce que** ledit deuxième étage de traitement comprend des premier (4) et second (5) déphaseurs connectés en sortie de deux desdites antennes (1 et 2), lesdits signaux délivrés (V1 et V2) en sortie de ces deux antennes étant déphasés d'un angle de π/2 ou 3π/2 l'un par rapport à l'autre, et des moyens (6) pour combiner lesdits signaux déphasés (V4 et V5) formant un premier signal combiné (V12) fourni en entrée de premiers moyens élévateurs au carré (11), **en ce que** ledit deuxième étage de traitement comprend en outre des moyens correcteurs (10), placés à la sortie de la troisième antenne (3), pour corriger l'atténuation introduite par les premier et second déphaseurs en série avec des seconds moyens élévateurs au carré (12), et **en ce que** ledit troisième étage de combinaison comprend un additionneur (15) recevant en entrée les signaux (S4 et S5) fournis à la sortie desdits premiers et seconds moyens élévateurs au carré.

**5.** Récepteur portable selon la revendication 4, **caractérisé en ce que** ledit deuxième étage de traitement comprend en outre des premiers (13) et deuxièmes (14) moyens de filtrage placés respectivement entre lesdits premiers (11) et deuxièmes (12) moyens élévateurs au carré et l'additionneur (15).

**Patentansprüche**

**1.** Tragbarer Empfänger, der eine erste Empfangsstufe, die drei Antennen (1, 2 und 3) enthält, die in der Weise orientiert sind, dass sie ein im Wesentlichen orthogonales Bezugssystem bilden, und ein externes Signal in einem gegebenen Frequenzbereich empfangen können, und eine zweite Stufe für die Verarbeitung von an den Ausgängen dieser Antennen ausgegebenen Signalen (V1, V2 und V3) umfasst, **dadurch gekennzeichnet, dass** er eine dritte Stufe für die Auswahl eines der am Ausgang der zweiten Verarbeitungsstufe ausgegebenen Signale umfasst, wobei die zweite Verarbeitungsstufe einen ersten Phasenschieber (4) und einen zweiten Phasenschieber (5) enthält, die mit dem Ausgang von zwei dieser Antennen (1 und 2) verbunden sind, wobei die am Ausgang dieser zwei Antennen ausgegebenen Signale (V1 und V2) zueinander um einen Winkel π/2 oder 3π/2 phasenverschoben sind, und Mittel (6) enthält, um diese phasenverschobenen Signale (V4 und V5) zu kombinieren und ein erstes Signal (S12) zu bilden, das an die dritte Auswahlstufe ausgegeben wird, wobei das von der dritten Antenne ausgegebene Signal (V3) ein zweites Signal (S3) bildet, das an die dritte Auswahlstufe ausgegeben wird, und dass die dritte Auswahlstufe Mittel (9) enthält, um unter den zwei am Ausgang der zweiten Stufe ausgegebenen Signalen (S12 und S3) entweder jenes Signal, das die größte Amplitude besitzt, oder jenes der zwei Signale, das eine Amplitude besitzt, die größer als eine Referenzamplitude ist, oder irgendeines der zwei Signale, falls sie die gleiche Amplitude besitzen, auszuwählen.

**2.** Tragbarer Empfänger nach Anspruch 1, **dadurch gekennzeichnet, dass** zwischen der dritten Antenne (3) und dem entsprechenden Eingang (S3) der Auswahlmittel (9) Korrekturmittel (10) zum Korrigieren der durch den ersten und den zweiten Phasenschieber eingeführten Dämpfung angeordnet sind.

**3.** Tragbarer Empfänger nach Anspruch 2, **dadurch gekennzeichnet, dass** ein erster Verstärker (7) zwischen den Mitteln (6) zum Kombinieren der phasenverschobenen Signale (V4 und V5) und den Auswahlmitteln (9) angeordnet ist und dass ein zweiter Verstärker (8) zwischen den Korrekturmitteln (10) und den Auswahlmitteln (9) angeordnet ist.

**4.** Tragbarer Empfänger, der eine erste Empfangsstufe mit drei Antennen (1, 2 und 3), die in der Weise orientiert sind, dass sie ein im Wesentlichen orthogonales Bezugssystem bilden, und ein externes Signal in einem gegebenen Frequenzbereich empfangen können, eine zweite Stufe für die Verarbeitung von an den Ausgängen dieser Antennen ausgegebenen Signalen sowie eine dritte Stufe für die Kombination der am Ausgang der zweiten Verarbeitungsstufe ausgegebenen Signale umfasst, **dadurch gekennzeichnet, dass** die zweite Verarbeitungsstufe einen ersten Phasenschieber (4) und einen zweiten Phasenschieber (5) enthält, die mit dem Ausgang von zwei dieser Antennen (1 und 2) verbunden sind, wobei die am Ausgang dieser zwei Antennen ausgegebenen Signale (V1 und V2) zueinander um einen Winkel π/2 oder 3π/2 phasenverschoben sind, und Mittel (6) enthält, um die phasenverschobenen Signale (V4 und V5) zu kombinieren und um ein erstes kombiniertes Signal (V12) zu bilden, das an den Eingang erster Quadrierungsmittel (11) geliefert wird, dass die zweite Verarbeitungsstufe außerdem Korrekturmittel (10) umfasst, die am Ausgang der dritten Antenne (3) angeordnet sind, um die Dämpfung zu korrigieren, die durch den ersten und den zweiten Phasenschieber eingeführt wird, und mit zweiten Quadrierungsmitteln (12) in Reihe geschaltet sind, und dass die dritte Kombinationsstufe einen Addierer (15) umfasst, der am Eingang die Signale (S4 und S5) empfängt, die am Ausgang der ersten und der zweiten Quadrierungsmittel geliefert werden.

5. Tragbarer Empfänger nach Anspruch 4, **dadurch gekennzeichnet, dass** die zweite Verarbeitungsstufe außerdem erste (13) und zweite (14) Filterungsmittel umfasst, die zwischen den ersten Quadrierungsmitteln (11) bzw. den zweiten Quadrierungsmitteln (12) und dem Addierer (15) angeordnet sind.

## Claims

1. Portable antenna comprising a first reception stage including three antennae (1, 2 and 3) oriented so as to form a substantially orthogonal reference mark, capable of receiving an external signal within a given frequency range, a second processing stage for the signals delivered (V1, V2 and V3) at the outputs of said antennae, **characterised in that** it includes a third stage for selecting one of the signals delivered at the output of said second processing stage, said second processing stage including first (4) and second (5) phase-shifters connected at the output of two of said antennae (1 and 2), said signals delivered ((V1 and V2) at the output of these two antennae being phase-shifted by an angle of $\pi/2$ or $3\pi/2$ in relation to each other, and means (6) for combining said phase-shifted signals (V4 and V5) forming a first signal (S12) delivered to said third selection stage, said signal delivered (V3) by the third antenna constituting to a second signal delivered (S3) to said selection stage, and **in that** said third selection stage includes means (9) for selecting from among said two signals delivered (S12 and S13) at the output of said second stage, either the signal having the largest amplitude, or one of the two signals having an amplitude larger than a reference amplitude, or arbitrarily one of the two signals if they have the same amplitude.

2. Portable receiver according to claim 1, **characterised in that** corrector means (10) for correcting the attenuation introduced by the first and second phase-shifters, are placed between said third antenna (3) and the corresponding input (S3) of said selection means (9).

3. Portable receiver according to claim 2, **characterised in that** a first amplifier (7) is placed between the means (6) for combining the phase-shifted signals (V4 and V5) and said selection means (9) and **in that** a second amplifier (8) is placed between the corrector means (10) and said selection means (9).

4. Portable receiver comprising a first reception stage including three antennae (1, 2 and 3) oriented so as to form a substantially orthogonal reference mark, capable of receiving an external signal within a given frequency range, a second stage for processing the signals delivered at the outputs of said antennae, and a third stage for combining the signals delivered at the output of said second processing stage, **characterised in that** said second processing stage includes first (4) and second (5) phase-shifters connected at the output of two of said antennae (1 and 2), said signals delivered (V1 and V2) at the output of these two antennae being phase-shifted by an angle of $\pi/2$ or $3\pi/2$ in relation to each other, and means (6) for combining said phase-shifted signals (V4 and V5) forming a first combined signal (V12) provided at the input of first means for raising to the second power (11), **in that** said second processing stage further includes corrector means (10) placed at the output of the third antenna (3), to correct the attenuation introduced by the first and second phase-shifters in series with second means for raising to the second power (12), and **in that** said third combination stage includes an adder (15) receiving at input the signals (S4 and S5) provided at the output of said first and second means for raising to the second power.

5. Portable receiver according to claim 4, **characterised in that** said second processing stage further includes first (13) and second (14) filtering means respectively placed between said first (11) and second (12) means for raising to the second power and the adder (15).

## Fig.1
(ART ANTERIEUR)

## Fig.2

## Fig.3
(ART ANTERIEUR)

# Fig.4

# Fig.5

EP 1 387 502 B1

# Fig.6